(19) Europäisches Patentamt
European Patent Office
Office européen des brevets

(11) Veröffentlichungsnummer: **0 131 915**
**A1**

(12) # EUROPÄISCHE PATENTANMELDUNG

(21) Anmeldenummer: **84108187.0**

(22) Anmeldetag: **12.07.84**

(51) Int. Cl.⁴: **C 08 G 65/46**

(30) Priorität: **19.07.83 DE 3325894**

(43) Veröffentlichungstag der Anmeldung:
**23.01.85 Patentblatt 85/4**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Reffert, Rudi Wilhelm**
**Berliner Strasse 18**
**D-6711 Beindersheim(DE)**

(72) Erfinder: **Minges, Peter**
**Alwin-Mittasch-Platz 12**
**D-6700 Ludwigshafen(DE)**

(72) Erfinder: **Swoboda, Johann, Dr.**
**Neuwiesenstrasse 28**
**D-6700 Ludwigshafen(DE)**

(54) **Verfahren zur Entfernung des Katalysators aus Polyphenylenethern.**

(57) Die Erfindung betrifft ein Verfahren zur Herstellung hochmolekularer Polyphenylenether aus einwertigen Phenolen, durch oxidative Kupplungsreaktion mit Sauerstoff in Anwesenheit eines Katalysatorkomplexes aus einem Kupfersalz und einem organischen Amin in Gegenwart eines Lösungsmittels, wobei die Metallkomponente des Katalysators nach der Polymerisation durch Zugabe mindestens eines organischen Ammoniumsalzes der allgemeinen Struktur

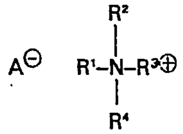

wobei A$\theta$ Anionen oder Polyanionen von organischen Carbon-, Sulfon- oder Phosphonsäuren; $R^1$ ein Wasserstoffatom $R^2$ und $R^3$ ein Wasserstoffatom, eine Alkylgruppe mit 1 bis 18 C-Atomen oder eine Arylgruppe und $R^4$ eine Alkylgruppe mit 1 bis 18 C-Atomen oder eine Arylgruppe darstellen, abgetrennt wird.

EP 0 131 915 A1

# Verfahren zur Entfernung des Katalysators aus Polyphenylenethern

Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 50°C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators.

Polyphenylenether und Verfahren zu ihrer Herstellung sind allgemein bekannt und vielfach beschrieben, wie beispielsweise in den US-Patentschriften 3 306 874, 3 306 875, 3 639 656, 3 642 699 und 3 661 848, deren Offenbarungsgehalt in die vorliegende Anmeldung aufgenommen wird.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z.B. in der DE-OS 2 105 372 im Gegenstromextraktionsverfahren vorgenommen wird. Verwendet werden auch Polyaminocarbonsäuren (s. DE-OS 2 364 319) oder andere Chelatisierungsmittel wie Nitrilotriessigsäure und ihre Natriumsalze oder Ethylendiaminotetraessigsäure und ihre Natriumsalze (s. DE-OS 2 532 477), letztere auch in Kombination mit quartären Ammoniumsalzen (s. US-PS 4 026 870). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen. Alle bisherigen Maßnahmen zur Entfernung von Katalysatorresten haben den Nachteil, daß zu einer vollständigen Entfernung (Restmenge des Metallions 10 ppm) mehrfache Extraktionsschritte bei z.T. komplizierten Trennverfahren angewendet werden müssen. Häufig wird dabei der Charakter des Polyphenylenethers verändert, was sich insbesondere in einer starken Verfärbung bemerkbar macht.

Fre/P

Der Erfindung lag deshalb die Aufgabe zugrunde, ein einfaches und hochwirksames Verfahren zur Abtrennung der Katalysatorreste bei der Selbstkondensation einwertiger Phenole in Gegenwart von Sauerstoff zu entwickeln, das insbesondere die Verfärbung der resultierenden Polyphenylenetherlösungen verhindert.

Diese Aufgabe wird erfindungsgemäß dadurch gelöst, daß die Metallkomponente des Katalysators nach der Polymerisation durch Zugabe von Ammoniumsalzen der allgemeinen Struktur

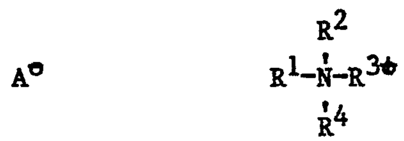

wobei $A^{\ominus}$ Anionen oder Polyanionen von organischen Carbon-, Sulfon- oder Phosphonsäuren; $R^1$ ein Wasserstoffatom; $R^2$ und $R^3$ ein Wasserstoffatom, eine Alkylgruppe mit 1 bis 18 C-Atomen oder eine Arylgruppe und $R^4$ eine Alkylgruppe mit 1 bis 18 C-Atomen oder eine Arylgruppe darstellt abgetrennt wird.

Bevorzugt sind Verfahren, bei denen das/die Ammoniumsalze aus Aminkomponenten wie Monoalkylaminen, Dialkylaminen, Trialkylaminen, Arylaminen, Alkylarylaminen gebildet werden; bei denen Anionen und Polyanionen von Polycarbonsäuren, Polyalkylenpolycarbonsäuren, Aminocarbonsäuren, Aminopolycarbonsäuren, Polyaminocarbonsäuren, Polyphosphonsäuren und Polyaminophosphonsäuren eingesetzt werden; bei denen Ammoniumsalze von Mono-, Di- und Trialkylaminen mit linearen oder verzweigten, gesättigten oder ungesättigten $C_1$-$C_{18}$-Alkylgruppen eingesetzt werden; bei denen zur Katalysatorabtrennung wasserlösliche Monoalkylammonium-, Dialkylammonium- oder Trialkylammoniumsalze der Ethylendiamintetraessigsäure oder der Nitrilotriessigsäure eingesetzt werden, oder bei denen zur Katalysatorabtrennung Poly-dialkylammoniumsalze der Polyacrylsäure oder Acrylsäure-Maleinsäureanhydridcopolymeren eingesetzt werden.

Bevorzugt wird das Katalysatorabtrennmittel in einer Menge von 1 bis 100 Mol Ammoniumsalzgruppe pro Mol Metallion in dem Katalysator eingesetzt.

Unter hochmolekularen Polyphenylenethern werden die durch oxidative Kupplung von 2,6-Dialkylphenol zu einer Kette alkylsubstituierter, in para-Stellung durch Sauerstoffatome etherartig verbundene Benzolringe verstanden. Die erfindungsgemäßen Polymeren weisen Molekulargewichte von 10 000 bis 90 000, bevorzugt 20 000 bis 80 000, bestimmt nach der in

"Macromolecular Synthesis" 1 (1978), Seite 83 angegebenen Methode, auf. Hochmolekulare Polyphenylenether, auch Poly(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in para-Stellung Alkylsubstituenten aufweisen, sind die übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol, 2,3,5,6-Tetramethylphenol sowie Gemische dieser Phenole.

Zur Ausführung der Polykondensation wird üblicherweise Sauerstoff in die 10 bis 50°C warme Lösung der Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach dem bevorzugt erfindungsgemäßen Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfe-I-Bromid, Kupfer-I-Chlorid, Kupfer-I--Iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1 : 1 bis 20 : 1, d.h., maximal bis zu einem Überschuß des 20-fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Beim anmeldungsgemäßen Verfahren wird die Polykondensationsreaktion bei Temperaturen zwischen 10 und 50, vorzugsweise 18 und 22°C, durchgeführt. Hierzu wird der Sauerstoff in die 10 bis 50°C wärme Lösung des Monomeren in Gegenwart des erfindungsgemäßen Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Menge anderer Materialien. Diese Reaktionslösungen werden erfindungsgemäß mit den komplex- und salzbildenden Ammoniumsalzen der allgemeinen Formel

$$A^{\ominus} \qquad R^1-\overset{R^2}{\underset{R^4}{N}}-R^{3\oplus}$$

zur Abtrennung des im Polymeren enthaltenen Metallkatalysators behandelt. Die Art und Weise der Zugabe der organischen Ammonium- und Polyammoniumsalze ist dabei unkritisch. Die Zugabe kann auf einmal oder in mehreren Anteilen, kontinuierlich oder diskontinuierlich, mit und ohne zusätzliches Wasser erfolgen. Zur Vereinfachung der Ausführungsform ist es vorteilhaft, wäßrige Lösungen der Ammoniumsalze einzusetzen. Die Separierung der Metallkomponente kann dabei in geeigneten Verfahrensvorrichtungen, wie z.B. in Filterpressen, in Dekantationstanks, Schälzentrifugen und ähnlichem vorgenommen werden.

Die Kontaktzeit des komplex- und salzbildenden Agens mit der katalysatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 60 Minuten. Die bevorzugte Reaktionstemperatur liegt zwischen 20°C und 90°C, es sind jedoch auch Temperaturbereiche darunter und darüber anwendbar. Als erfindungsgemäße Ammoniumsalze der allgemeinen Struktur

$$A^{\ominus} \qquad R^1-\overset{\displaystyle R^2}{\underset{\displaystyle R^4}{N}}-R^{3\oplus}$$

werden solche Verbindungen eingesetzt, bei denen als Anion oder Polyanion $A^{\ominus}$ organische Carbonsäuren, Sulfonsäuren oder Phosphonsäuren verwendet werden und bei denen die Reste $R^1$-$R^4$ bedeuten

$R^1$ = H
$R^2$, $R^3$ = H, $C_1$-$C_{18}$-Alkyl, Aryl
$R^4$ = $C_1$-$C_{18}$-Alkyl, Aryl

Beispiele für die Anionen und Polyanionen $A^{\ominus}$ sind: Carbonsäuren, Polycarbonsäuren und polymere Polycarbonsäuren, wie Oxalsäure, Zitronensäure, Polyacrylsäure oder Copolymere aus Acrylsäure und Maleinsäureanhydrid. Aminocarbonsäuren wie Glycin, Aminopolycarbonsäuren wie Nitrilotriessigsäure, Polyalkylenpolyaminocarbonsäuren wie Ethylendiamintetraessigsäure, Hydroxyethylethylendiamintriessigsäure oder Diethylentriaminpentaessigsäure; Polysulfonsäuren wie sulfonisiertes Polystyrol, Polyphosphonsäuren, Polyalkylenpolyphosphonsäuren, Hydroxyalkylenpolyphosphonsäuren, Aminopoly(alkylenphosphonsäuren), Alkylendiamindicarbonsäurepoly(alkylenphosphonsäure).

Besonders bevorzugt eingesetzt werden Anionen der Zitronensäure, Polyacrylsäure mit K-Wert 10 bis 50 (bestimmt nach DIN 53 726 in 1 %igen Löungen in Dimethylformamid), Glycin, Nitrilotriessigsäure, Ethylendiamintetraessigsäure, 1-Aminoethan-1,1-diphosphonsäure, Aminotris(methylenphosphonsäure), Ethylendiamintetra(methylenphosphonsäure).

Als Aminkomponente für das erfindungsgemäße Ammoniumsalz werden Monoalkylamine, Dialkylamine, Trialkylamine, Arylamine, Arylalkylamine eingesetzt, wobei die Alkylgruppen 1 bis 18 C-Atome, vorzugsweise 1 bis 12 C-Atome umfassen und linear, verzweigt oder cyclisch, gesättigt oder ungesättigt sein können. Verwendet werden können darüber hinaus alle anderen Amine die wasserlösliche Ammoniumsalze mit den erfindungsgemäßen organischen Anionen und Polyanionen bilden. Besonders bevorzugt sind jedoch aliphatische und cycloaliphatische Amine wie beispielsweise Mono-, Di- und Tripropylamin, Mono-, Di- und Tributylamin, Mono- und sek.-Butylamin, Mono- und Dioctylamin, Mono- und Diethylhexylamin, Dimethylpentylamin, Mono- und Dicyclohexylamin, Ethylmethylamin, Dimethylbutylamin, Morpholin, Methylcyclohexylamin, N,N'-Dialkylethylendiamine, N,N',N'-Trialkyl-

ethylendiamine, N,N'-Dialkylpropandiamine, N,N,N'-Trialkylpentadiamine, N,N,N',N'-Tetralkylethylendiamine. Insbesondere bevorzugt sind solche Amine, die auch bei der Herstellung des Katalysators Verwendung finden wie Dibutylamin, Octylamin, Ethylhexylamin, Dimethylpentylamin, Dimethyl-n-butylamin, N,N'-Di-tert-butylethylendiamin, N,N,N',N'-Tetramethylethylendiamin. Offensichtlich ist auch, daß zur Herstellung der Ammoniumsalze Mischungen von primären, sekundären und tertiären Aminen eingesetzt werden können.

Eingesetzt werden können auch gemischte Alkali/Ammoniumsalze oder Erdalkali/Ammoniumsalze der Anionen $A^{\ominus}$, dies ist jedoch weniger bevorzugt.

Besonders bevorzugte Ammoniumsalze der allgemeinen Struktur

$$A^{\ominus} \qquad \begin{matrix} & R^2 & \\ & | & \\ R^1- & N & -R^{3\oplus} \\ & | & \\ & R^4 & \end{matrix}$$

für die Katalysatorabtrennung sind beispielsweise das Bis-dibutylammoniumsalz der Zitronensäure, das Dimethyl-n-butylammoniumsalz des Glycins, das Bis- und Trisdipropylammoniumsalz der Nitrilotriessigsäure, das Bis- und Tris-dibutylammoniumsalz der Ethylendiamintetraessigsäure, das Tris-n-octylammoniumsalz der Ethylendiamintetraessigsäure, das Poly-dibutylammoniumsalz der Polyacrylsäure (K-Wert 25, 1 %ig in Dimethylformamid) das sich bei einer pH-Einstellung von 9,5 bildet, und das Trisdibutylammoniumsalz der Ethylendiamintetra-(methylenphosphonsäure).

Die komplex- und salzbildenden erfindungsgemäßen organischen Ammoniumsalze werden in solchen Mengen eingesetzt, daß mindestens 1 Mol Ammoniumsalzgruppe auf ein Mol des zu entfernenden Metallions entfällt. Im allgemeinen werden je Äquivalent Schwermetallion 1,2 bis 100 Äquivalente Ammoniumsalzgruppen eingesetzt. Besonders bevorzugt werden 2 bis 50 Äquivalente Ammoniumsalzgruppen verwendet.

Die Abtrennung der Metallkatalysatoren bis zur vollständigen Entfernung aus dem Polyphenylenether-Polymeren kann durch mehrfache Zugabe der erfindungsgemäßen Ammoniumsalze oder Polyammoniumsalze und anschließende Separierung der resultierenden Metallkomplexe und Metallsalze gemäß der bereits beschriebenen Verfahren erfolgen. Bevorzugt wird jedoch eine Ausführungsform der Erfindung, wonach die gesamte Katalysatormenge in einem Schritt aus dem Polymeren entfernt wird.

Nach der Entfernung der metallischen Komponente als Komplex und/oder Salz kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, d.h. Methanol, isoliert werden. Das filtrierte Produkt kann in Alkohol aufgeschlämmt und - falls gewünscht - mit einem Entfärbungsmittel gerührt werden und dann wird der Polyphenylenether abfiltriert und nach herkömmlichen Verfahren in Filme, Fasern, ausgeformte Gegenstände oder dgl. umgewandelt. Andere Alkohole wie Isopropanol, Propanol oder Ethanol sind in gleicher Weise verwendbar.

Die Aminkomponente des Katalysators kann durch Destillation oder nach anderen herkömmlichen Verfahren zurückgewonnen werden.

Ein bevorzugter Aspekt des vorliegenden Verfahrens ist die Herstellung von Polyphenylenetherlösungen mit niederigem Metallgehalt, aus denen die polymeren Stoffe nach sog. Totalisolationsverfahren, z.B. durch Sprühtrocknung, Dampfausfällung und Heißwasserzerkrümelung oder Entspannungsverdampfung gewonnen werden können. Dies erleichtert die wirtschaftliche Anwendung solcher Verfahren, die hinsichtlich der erforderlichen Energie, der Lösungsmittelverluste und dgl. wirtschaftlicher sind, als die bekannten Ausfällungsverfahren.

Die mit der Erfindung erzielten Vorteile bestehen insbesondere darin, daß mit Hilfe der erfindungsgemäßen Ammoniumsalze die Metallkatalysator--Reste aus den Polyphenylenethern nahezu vollständig entfernt werden können. Die resultierenden Polyphenylenether zeichnen sich bei Rest-Katalysatormetall-Gehalten von 10 ppm durch eine ungewöhnlich helle Eigenfarbe und eine außerordentliche Farb- und Oxidationsstabilität bei der Verarbeitung im Temperaturbereich über 250°C aus. Die Abtrennung der Metallkatalysatoren nach dem erfindungsgemäßen Verfahren ist einfach und erfolgt zumeist in einem Schritt. Dabei können niedrig- und relativ hochkonzentrierte Polyphenylenoxid-Reaktionslösungen (bis zu 25 Gew.%) ohne Probleme umgesetzt werden. Ein unerhoffter Nebeneffekt des erfindungsgemäßen Verfahrens ist außerdem, daß durch die Verwendung der Ammoniumsalze der Komplexbildner im Gegensatz zu allen bisher bekannen Verfahren, die Aminkomponente des Katalysators nicht mehr in die wäßrige Phase überführt wird, sondern in der organischen Phase verbleibt und so zusätzlich zur Wärmestabilisierung des Polyphenylenethers insbesondere bei Anwendung der sog. Totalisolationsverfahren beiträgt.

Die folgenden Beispiele dienen dazu, die Erfindung zu illustrieren, ohne daß damit eine Begrenzung der Erfindung beabsichtigt ist. Die angegebenen Teile sind Gewichtsteile, es sei denn, es ist anders angegeben.

Die Intrinsikviskosität wird durch Messung an 0,5 %igen Lösungen in Chloroform bei 30°C bestimmt.

Die Beurteilung der Eigenfarbe der Polyphenylenetherlösungen nach der Katalysatorabtrennung erfolgte visuell in Anlehnung an die Jod-Farbskala gemäß DIN 53 403. Dabei wurden die Proben einmal direkt nach der Katalysatorabtrennung bei Raumtemperatur beurteilt und anschließend unter Stickstoff für 1 Stunde auf 250°C erhitzt und beurteilt. Die Ergebnisse sind in Tab. 1 zusammengefaßt.

<u>Beispiele und Vergleichsbeispiele</u>

In den nachfolgenden Beispielen und Vergleichsbeispielen werden die Polymerisation und die Maßnahmen zur Katalysatorabtrennung ausführlich beschrieben. Um die Vorteile des erfindungsgemäßen Verfahrens herauszuarbeiten, wurden bei allen Versuchen folgende Untersuchungen angestellt:

1) Wurde die Zeit bestimmt, die bei der Katalysatorabtrennung zur vollständigen Phasentrennung von organischer den Polyphenylenether enthaltender Phase und wäßriger die extrahierten Metallkatalysatorreste enthaltender Phase benötigt wurde.

2) Wurde der Restmetallkatalysatorgehalt der organischen Phase bestimmt.

3) Wurde die Eigenfarbe der organischen Phase direkt nach der Katalysatorabtrennung bestimmt. Dies geschah in Anlehnung an die Jod-Farbskala gemäß DIN 53 40.

4) Wurde die organische Phase nach der Katalysatorabtrennung unter Stickstoff 1 Stunde auf 250°C erhitzt und anschließend die Eigenfarbe wie oben beschrieben bestimmt.

5) Wurde die Grenzviskosität nach der Katalysatorabtrennung an mit Methanol gefälltem und anschließend getrocknetem Polymeren bestimmt.

Die Ergebnisse der Untersuchungen sind in Tab. 1 zusammengefaßt. Sie verdeutlichen die Vorteile des erfindungsgemäßen Verfahrens, nämlich eine rasche und umfassende Katalysatorabtrennung s. Spalten 3 und 4 in Tab. 1 und eine hohe Thermostabilität der aus der Katalysatorabtrennung resultierenden PPE-Lösungen (Spalte 6, Tab. 1). Die mitaufgeführten Vergleichsbeispiele dokumentieren den Stand der Technik.

<u>Beispiel 1</u>

Herstellung von Poly-(2,6-dimethyl-1,4-phenylen)-ether

Polymerisation:

Eine Vorlage von 1,3 g Cu-I-Bromid und 20 g 1,4-Dimethylpentylamin und 2 g 2,6-Dimethylphenol (= DMP) wurde bei 20°C 5 Minuten unter Einleiten von Sauerstoff gerührt, und dann wurde im Verlauf von 30 Minuten in eine Lösung von 204 g DMP in 1400 Toluol eindosiert. Anschließend wurde noch 1 Stunde bei 20°C gerührt. Die Reaktion wird in Gegenwart von 30 Liter Sauerstoff pro Stunde durchgeführt.

Katalysatorabtrennung:

Nach Beendigung der Reaktion wurde die Polymerisation mit 20 ml einer 10 %igen wäßrigen Lösung das Tis-dibutylammoniumsalz der Ethylendiamintetraessigsäure versetzt und 20 Minuten heftig bei 60°C gerührt. Anschließend wurden die organische und die wäßrige getrennt und oben beschriebene Unterschungen durchgeführt. Die Ergebnisse sind in Tabelle 1 aufgeführt.

<u>Beispiel 2</u>

Herstellung des Poly-(2,6-dimethyl-1,4-phenylen)-ethers

Polymerisation:

Eine Lösung von 1,2 g Cu-I-chlorid, 1,9 g Natriumbromid und 0,3 g Methyltrioctylammoniumchlorid in 15 $cm^3$ Methanol wurden zu 1100 $cm^3$ Toluol hinzugegeben und bei 40°C gerührt. Anschließend gab man 14 g Di-n-butylamin und eine Lösung von 275 g 2,6-Dimethylphenol in 400 $cm^3$ Toluol hinzu und begaste die Reaktionslösung mit 0,1 $cm^3$ Sauerstoff pro Stunde während 90 Minuten. Danach wurde die Sauerstoffzufuhr abgedreht und das Reaktionsgemisch mit Stickstoff gespült.

Katalysatorabtrennung:

Nach Beendigung der Reaktion wurde die Polymerlösung mit 20 $cm^3$ einer 5 %igen wäßrigen Lösung des Trisdibutylammoniumsalzes der Ethylendiamintetraessigsäure während 30 Minuten bei 50°C heftig gerührt, anschließend auf 70°C erhitzt und die organische von der wäßrigen Phase abgetrennt. Dann wurden die oben beschriebenen Untersuchungen durchgeführt. Ergebnisse s. Tabelle 1.

Beispiel 3

Die Herstellung des Poly-(2,6-dimethyl-1,4-phenylen)-ethers erfolgte wie in Beispiel 1 beschrieben. Die Reinigung der Polymerlösung wurde ebenfalls wie in Beispiel 1 durchgeführt, mit dem Unterschied, daß 100 $cm^3$ einer 1 %igen wäßrigen Lösung des Tris-dibutylammoniumsalzes der Ethylendiamintetraessigsäure eingesetzt wurden. Eigenschaften des Polymeren siehe Tabelle 1.

Beispiel 4

Die Herstellung des Poly-(2,6-dimethyl-1,4-phenylen)-ethers und die Katalysatorabtrennung erfolgte wie in Beispiel 2 beschrieben, mit dem Unterschied, daß die Metallkomponente mit 40 $cm^3$ einer 5 %igen wäßrigen Lösung des Tris-dibutylammoniumsalzes der Nitrilotriessigsäure abgetrennt wurde. Eigenschaften des Polymeren siehe Tabelle 1.

Beispiel 5

Herstellung des Poly-(2,6-dimethyl-1,4-phenylen)-ethers und Katalysatorabtrennung erfolgten wie in Beispiel 2 beschrieben. Es wurden jedoch 100 $cm^3$ einer 2 %igen wäßrigen Lösung des Bis-n-octylammoniumsalzes der Ethylendiamintetraessigsäure zur Abtrennung der Metallkomponente des Katalysators eingesetzt.

Beispiel 6

Herstellung des Poly-(2,6-dimethyl-1,4-phenylen)-ethers und Katalysatorabtrennung erfolgten wie in Beispiel 2. Es wurden jedoch 50 $cm^3$ mit einer 3 %igen wäßrigen Lösung des Tris-dibutylammoniumsalzes der Ethylendiamintetra(methylenphosphonsäure) zur Katalysatorabtrennung eingesetzt.

Beispiel 7

Es wurde wie in Beispiel 6 verfahren, mit dem Unterschied, daß zur Katalysatorabtrennung 100 $cm^3$ eines Polydibutylammoniumsalzes einer Polyacrylsäure eingesetzt wurde, das durch Umsetzung einer Polyacrylsäure nur K-Wert 30, gemessen 1 %ig in Dimethylformamid mit Dibutylamin bei einem pH-Wert von 1,5 hergestellt wurde.

Vergleichsbeispiel A (nicht erfindungsgemäß)

Die Herstellung des Polyphenylenoxids erfolgte wie in Beispiel 1 beschrieben. Zur Reinigung der Polymerlösung wurden 4,0 g Ethylendiamintetraessigsäure (vgl. Beispiel 1, DE-OS 23 64 319) hinzugegeben und die Polymerlösung eine weitere Stunde bei 50°C gerührt. Die organische Phase wurde von der wäßrigen Phase abgetennt und die oben beschriebenen Untersuchungen durchgeführt. Ergebnisse s. Tabelle 1.

Vergleichsbeispiel B (nicht erfindungsgemäß)

Die Herstellung des Poly-(2,6-dimethyl-1,4-phenylen)-ethers erfolgte wie in Beispiel 2 beschrieben. Die Reinigung der Polymerlösung von verbliebenem Metallkatalysator wurde gemäß Beispiel 6 der DE-OS 23 64 319 durchgeführt. Nach der Phasentrennung von organischer und wäßriger Phase wurden oben beschriebene Untersuchungen durchgeführt. Ergebnisse s. Tabelle 1.

Tabelle 1

| Beispiel | Grenzviskosität (dl/g) | Rest-Cu-Gehalt (ppm) | t(min) bis zur vollständigen Phasentrennung | Eigenfarbe (mg Jod) nach Katalysatorabtrennung | Eigenfarbe (mg Jod) nach Temperung 230°C, 1 h |
|---|---|---|---|---|---|
| 1 | 0,75 | 0,5 | 5 | 7-10 | 20-30 |
| 2 | 0,62 | 0,2 | 4 | 7-10 | 15-20 |
| 3 | 0,76 | 0,3 | 5 | 7-10 | 15-20 |
| 4 | 0,64 | 0,3 | 6 | 7-10 | 20-30 |
| 5 | 0,65 | 0,3 | 7 | 7-10 | 15-20 |
| 6 | 0,62 | 0,2 | 8 | 7-10 | 15-20 |
| 7 | 0,60 | 0,2 | 8 | 7-10 | 20-30 |
| Vergleichsbeispiele (nicht erfindungsgemäß) | | | | | |
| A | 0,60 | 1,6 | 14 | 10-15 | 40-60 |
| B | 0,57 | 1,3 | 12 | 10-15 | 40-60 |

Patentansprüche

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 50°C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol und gegebenenfalls eines Aktivators, dadurch gekennzeichnet, daß die Metallkomponente des Katalysators nach der Polymerisation durch Zugabe mindestens eines organischen Ammoniumsalzes der allgemeinen Struktur

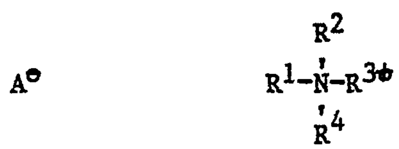

wobei $A^{\ominus}$ Anionen oder Polyanionen von organischen Carbon-, Sulfon- oder Phosphonsäuren; $R^1$ ein Wasserstoffatom $R^2$ und $R^3$ ein Wasserstoffatom, eine Alkylgruppe mit 1 bis 18 C-Atomen oder eine Arylgruppe und $R^4$ eine Alkylgruppe mit 1 bis 18 C-Atomen oder eine Arylgruppe darstellen, abgetrennt wird.

2. Verfahren gemäß Anspruch 1, dadurch gekennzeichnet, daß das/die Ammoniumsalze aus Aminkomponenten wie Monoalkylaminen, Dialkylaminen, Trialkylaminen, Arylaminen, Alkylarylaminen gebildet werden.

3. Verfahren gemäß Anspruch 1, dadurch gekennzeichnet, daß Anionen und Polyanionen von Polycarbonsäuren, Polyalkylenpolycarbonsäuren, Aminocarbonsäuren, Aminopolycarbonsäuren, Polyaminocarbonsäuren, Polyphosphonsäuren und Polyaminophosphonsäuren eingesetzt werden.

4. Verfahren gemäß Anspruch 1, dadurch gekennzeichnet, daß Ammoniumsalze von Mono-, Di- und Trialkylaminen mit linearen oder verzweigten, gesättigten oder ungesättigten $C_1$-$C_{18}$-Alkylgruppen eingesetzt werden.

5. Verfahren gemäß den vorangehenden Ansprüchen, dadurch gekennzeichnet, daß zur Katalysatorabtrennung wasserlösliche Monoalkylammonium-, Dialkylammonium- oder Trialkylammoniumsalze der Ethylendiamintetraessigsäure oder der Nitrilotriessigsäure eingesetzt werden.

6. Verfahren gemäß den vorangehenden Ansprüchen, dadurch gekennzeichnet, daß zur Katalysatorabtrennung Poly-dialkylammoniumsalze der Polyacrylsäure oder Acrylsäure-Maleinsäureanhydridcopolymeren eingesetzt werden.

7. Verfahren gemäß den vorangehenden Ansprüchen, dadurch gekennzeichnet, daß die Katalysatorabtrennmittel in einer Menge von 1 bis 100 Mol Ammoniumsalzgruppe pro Mol Metallion in dem Katalysator eingesetzt werden.

Europäisches Patentamt

# EUROPÄISCHER RECHERCHENBERICHT

0131915
Nummer der Anmeldung

EP 84 10 8187

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | FR-A-1 572 847 (GEN. ELECTRIC) * Zusammenfassung; Seite 3, Zeile 38 * | 1-4 | C 08 G 65/46 |
| D,Y | US-A-4 026 870 (D.E. FLORYAN u.a.) * Ansprüche * | 1-4 | |
| A | EP-A-0 100 048 (BASF) * Ansprüche; Seite 7, Zeilen 11-14 * | 1 | |
| A | FR-A-2 334 702 (GEN. ELECTRIC) * Ansprüche * | 1-3 | |
| A | US-A-3 984 374 (G.D. COOPER u.a.) * Ansprüche * | 1 | RECHERCHIERTE SACHGEBIETE (Int. Cl. 3) |
| | | | C 08 G |

Der vorliegende Recherchenbericht wurde für alle Patentansprüche erstellt.

| Recherchenort | Abschlußdatum der Recherche | Prüfer |
|---|---|---|
| DEN HAAG | 21-08-1984 | DERAEDT G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503. 03.82